# EUROPEAN PATENT APPLICATION

(11) **EP 4 661 239 A1**
(43) Date of publication of application: **10.12.2025**
(21) Application number: 24777829.3
(22) Date of filing: 20.03.2024
(51) Int. Cl.: H02J 7/00, H01M 10/44

(54) **CHARGING/DISCHARGING DEVICE, AND CHARGING/DISCHARGING METHOD**

(30) Priority: 31.03.2023 CN 202310342116
(71) Applicant: Zhuhai Titans New Power Electronics Co., Ltd, Zhuhai, Guangdong 519000 (CN)
(72) Inventor: LI, Yong, Zhuhai, Guangdong 519000 (CN); ZHENG, Xiaote, Zhuhai, Guangdong 519000 (CN); CHENG, Wei, Zhuhai, Guangdong 519000 (CN)
(74) Representative: Murgitroyd & Company
(86) International application number: PCT/CN2024/082742
(87) International publication number: WO 2024/199040

(57) **Abstract**

A charging and discharging device and a charging and discharging method are provided. The charging and discharging device includes a rack, a pressing assembly, a first driving assembly, a probe mechanism and a supporting plate. The pressing assembly includes a negative pressure mechanism or an upper pressing structure. The supporting plate is provided between the pressing assembly and the probe mechanism in a first direction. After the first driving assembly drives the pressing assembly to move in the first direction and abut against a battery in a tray, the pressing assembly and the supporting plate move in the first direction so that the battery in the tray is engaged with the probe mechanism. The first driving assembly drives the pressing assembly to move toward the tray, the pressing assembly abuts against the battery, and the first driving assembly further drives the pressing assembly to move, so that the pressing assembly and the tray move toward the probe mechanism, and the battery abuts against the probe mechanism.

## Description

This application claims priority to Chinese Patent Application No. 202310342116.2 filed with the China National Intellectual Property Administration on March 31, 2023, and entitled "CHARGING AND DISCHARGING DEVICE AND CHARGING AND DISCHARGING METHOD", which is incorporated herein by reference in its entirety.

### TECHNICAL FIELD

Embodiments of the present application relate to but are not limited to the technical field of battery production devices, and in particular, to a charging and discharging device and a charging and discharging method.

### BACKGROUND

The number of batteries that a charging and discharging device can be engaged with at one time is quite limited. Due to space constraints, the current structural design cannot increase the number of channels of the device. Increasing the number of channels of the device puts forward higher requirements on the compactness and positioning accuracy of the device.

When the battery is formed in the charging and discharging device, the battery needs to be engaged with the probe, usually the positive electrode probe and the negative electrode probe are engaged with the battery respectively, some charging and discharging devices also need to engage the suction nozzle with the battery, and the charging and discharging devices respectively drive the structure where the positive electrode probe is located, the structure where the negative electrode probe is located and the structure where the suction nozzle is located to move and engage with the battery respectively. When the battery undergoes formation in the charging and discharging device, it is necessary for the battery to be engaged with probes. Typically, the positive and negative probes are respectively engaged with the battery, some charging and discharging devices also need to engage the suction nozzle with the battery, and the charging and discharging devices respectively drive the structure where the positive probe is located, the structure where the negative probe is located and the structure where the suction nozzle is located to move and engage with the battery. In this case, there are many structures that need to move up and down in the charging and discharging device, and it is easy to pull the wire harness, which causes the wire harness to be easily damaged and increases the maintenance cost. Moreover, the position accuracy of the probe connected to the wire harness may be affected during the process of pulling the wire harness, thereby affecting the engaging accuracy of the battery and the probe.

On the other hand, to reduce the occurrence of wire harness pulling, a certain length of wiring harness will be reserved in the charging and discharging device during wiring. However, this wiring manner will undoubtedly increase the size of the charging and discharging device, and the space occupied by the charging and discharging device in the factory will increase.

### SUMMARY

The following is a summary of the subject matter described in detail herein. This summary is not intended to limit the scope of the claims.

Embodiments of the present application provide a charging and discharging device and a charging and discharging method, and technical solutions used are as follows.

The charging and discharging device provided by the embodiments of the present application includes a rack, a pressing assembly, a first driving assembly, a probe mechanism and a supporting plate. The pressing assembly is arranged on the rack, and the pressing assembly includes a negative pressure mechanism or an upper pressing structure. The first driving assembly is connected to the rack. The probe mechanism is arranged on the rack. The supporting plate is configured to carry a tray, the supporting plate is connected to the rack, and the supporting plate is provided between the pressing assembly and the probe mechanism in a first direction. The first driving assembly is configured to drive the pressing assembly to move in the first direction to abut against a battery in the tray to drive the tray to move in the first direction to enable the battery in the tray to be engaged with the probe mechanism.

In some embodiments of the present application, the probe mechanism includes a probe assembly, the probe assembly includes a probe holder, a positive probe and a negative probe, and the positive probe and the negative probe are respectively connected to the probe holder.

In some embodiments of the present application, the positive probe includes at least one positive sampling pin and at least one positive power pin, the positive sampling pin and the positive power pin are respectively elastically connected to the probe holder through a first elastic member, and the first elastic member has a compressive elastic potential energy.

In some embodiments of the present application, the negative probe includes a negative power pin and a negative sampling pin, the negative sampling pin is elastically connected to the negative power pin through a fifth elastic member, two ends of the fifth elastic member are configured to apply elastic pressure to the negative power pin and the negative sampling pin respectively, the negative power pin is elastically connected to the probe holder through a second elastic member, and two ends of the second elastic member are configured to apply elastic pressure to the negative power pin and the probe holder respectively.

In some embodiments of the present application, the probe mechanism includes a first mounting plate, a first bottom plate, and a plurality of first isometry connection structures, the plurality of first isometry connection structures are disposed between the first mounting plate and the first bottom plate, and the plurality of probe assemblies are all connected to the first mounting plate through the probe holder.

In some embodiments of the present application, the pressing assembly includes a negative pressure mechanism, the negative pressure mechanism includes a negative pressure assembly, the negative pressure assembly includes a suction nozzle holder and a negative pressure suction nozzle, the negative pressure suction nozzle is elastically connected to the suction nozzle holder through a third elastic member, and two ends of the third elastic member are configured to apply elastic pressure to the negative pressure suction nozzle and the suction nozzle holder, respectively.

In some embodiments of the present application, the negative pressure assembly includes a pressurization assembly, the pressurization assembly includes a pressurization structure and a fourth elastic member, the pressurization structure is configured to abut against the battery, the fourth elastic member is connected to the pressurization structure, and the pressurization structure is connected to the suction nozzle holder, and in a case where the negative pressure assembly is engaged with the battery, the pressurization structure is pressurized to compress the fourth elastic member.

In some embodiments of the present application, the suction nozzle holder is provided with a recessed pressurization mounting area, a first end of the pressurization structure is inserted into the pressurization mounting area, the first end of the pressurization structure is provided with a first accommodating area, and the fourth elastic member is provided in the first accommodating area.

In some embodiments of the present application, each of the negative pressure assembly includes a first limiting structure, the first limiting structure is disposed on the suction nozzle holder and passes through the first accommodating area, and two ends of the fourth elastic member are configured to apply elastic pressure to the suction nozzle holder and the pressurization structure, respectively.

In some embodiments of the present application, the negative pressure mechanism includes a second mounting plate, a second bottom plate, and a plurality of second isometry connection structures, the plurality of second isometry connection structures are disposed between the second mounting plate and the second bottom plate, and the plurality of negative pressure assemblies are all connected to the second mounting plate through the suction nozzle holder.

In some embodiments of the present application, the charging and discharging device includes a second driving assembly, the second driving assembly is connected to the rack, an output end of the second driving assembly is configured to abut against the supporting plate and push the supporting plate to move in a direction opposite to the first direction, and the output end of the second driving assembly is capable of being separated from the supporting plate to release the second driving assembly from abutting against the supporting plate.

In some embodiments of the present application, the charging and discharging device includes an elastic structure, and the elastic structure is connected to the rack, and in a case where the second driving assembly is released from abutting against the supporting plate, the elastic structure abuts against the supporting plate, and the supporting plate moves close to the probe mechanism in the first direction to compress the elastic structure.

The charging and discharging method provided by the present application is implemented by a charging and discharging device, the charging and discharging device includes a pressing assembly, a first driving assembly, a probe mechanism and a supporting plate, the pressing assembly includes an upper pressing structure or a negative pressure mechanism, and the supporting plate is provided between the pressing assembly and the probe mechanism in a first direction; and the charging and discharging method includes the following workflow:
carrying a tray by the supporting plate;
driving the pressing assembly by the first driving assembly to move in a first direction and abut against a battery in the tray;
continuing driving the pressing assembly and the supporting plate by the first driving assembly to move in the first direction until the battery in the tray is engaged with the probe mechanism.

In some embodiments of the present application, the charging and discharging device includes a second driving assembly and an elastic structure, and an output end of the second driving assembly and the elastic structure are both provided on a same side of the supporting plate where the probe mechanism is located;
where before the supporting plate carries the tray, the output end of the second driving assembly pushes the supporting plate in a direction opposite to the first direction to a feed height of the tray; and
after the tray is carried by the supporting plate, and before the first driving assembly drives the pressing assembly to move in the first direction and abut against the battery in the tray, the output end of the second driving assembly retracts in the first direction to be released from abutting against the supporting plate, and after the output end of the second driving assembly is separated from the supporting plate, the elastic structure abuts against the supporting plate, and the elastic structure is capable of being compressed in the first direction.

Other aspects can be understood upon reading and understanding the accompanying drawings and the detailed description.

### BENEFICIAL EFFECTS

The embodiments of the present application have at least the following beneficial effects: in the charging and discharging device, the first driving assembly drives the pressing assembly to move toward the tray, the pressing assembly abuts against the battery, and the first driving assembly further drives the pressing assembly to move, so that the pressing assembly and the tray move toward the probe mechanism, and the battery abuts against the probe mechanism. During the engaging process, the position of the probe mechanism is fixed, which prevents the wire harness connected to the probe mechanism from being pulled, and prevents the wire harness from affecting the position accuracy of the probe mechanism. The present application can be widely applied to the technical field of battery production devices.

### BRIEF DESCRIPTION OF THE DRAWINGS

The described and/or additional aspects and advantages of the embodiments of the present application will become apparent and easy to understand with reference to the following drawings. It should be noted that the embodiments embodied in the following drawings are exemplary and are only used to explain the present application, and cannot be understood as limiting the present application.
FIG. 1 is a structural view of a charging and discharging device according to an embodiment of the present application.
FIG. 2 is a structural view of a charging and discharging device according to an embodiment of the present application.
FIG. 3 is a structural view of a charging and discharging device according to an embodiment of the present application.
FIG. 4 is a cross-sectional view taken along line A-A in FIG. 3.
FIG. 5 is a structural view of a probe mechanism according to an embodiment of the present application.
FIG. 6 is a structural view of a probe mechanism according to an embodiment of the present application.
FIG. 7 is a structural view of a probe assembly according to an embodiment of the present application.
FIG. 8 is a structural view of a probe assembly according to an embodiment of the present application.
FIG. 9 is a cross-sectional view taken along line B-B in FIG. 8.
FIG. 10 is a cross-sectional view of a negative probe according to an embodiment of the present application.
FIG. 11 is a structural view of a negative pressure mechanism according to an embodiment of the present application.
FIG. 12 is a structural view of a negative pressure mechanism according to an embodiment of the present application.
FIG. 13 is a structural view of a negative pressure assembly according to an embodiment of the present application.
FIG. 14 is a structural view of a negative pressure assembly according to an embodiment of the present application.
FIG. 15 is a cross-sectional view of a negative pressure assembly according to an embodiment of the present application.
FIG. 16 is a structural view of a pressurization structure according to an embodiment of the present application.
FIG. 17 is a cross-sectional view taken along line C-C in FIG. 16.

Reference numerals: 1000, negative pressure mechanism; 1100, negative pressure assembly; 1101, suction nozzle holder; 1102, negative pressure suction nozzle; 1103, pressurization structure; 1104, first accommodating area; 1105, first limiting structure; 1201, second mounting plate; 1202, second bottom plate; 1203, second isometry connection structure; 1300, movable bearing structure; 1301, second sliding groove member; 2000, first driving assembly; 3000, probe mechanism; 3100, probe assembly; 3101, probe holder; 3102, negative power pin; 3103, negative sampling pin; 3104, positive sampling pin; 3105, positive power pin; 3201, first mounting plate; 3202, first bottom plate; 3203, first isometry connection structure; 4000, supporting plate; 5100, second driving assembly; 5200, elastic structure; 6100, top square tube frame; 6200, bottom square tube frame; 6201, first sliding groove member; 6300, upright column; 7000, first limiting plate.

### DETAILED DESCRIPTION

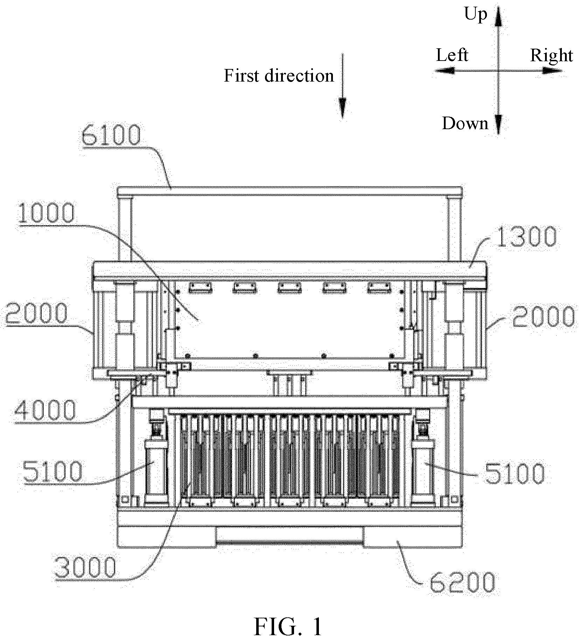

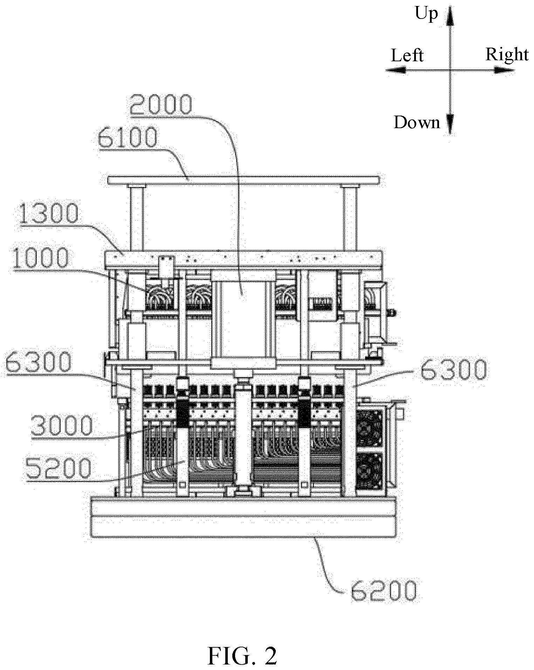

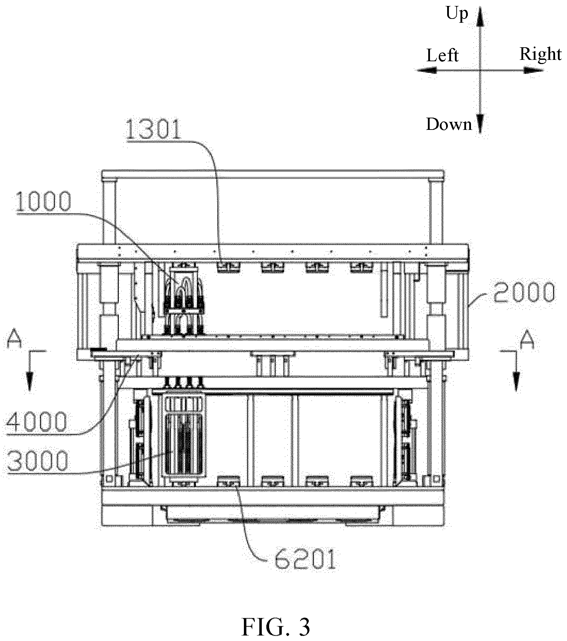

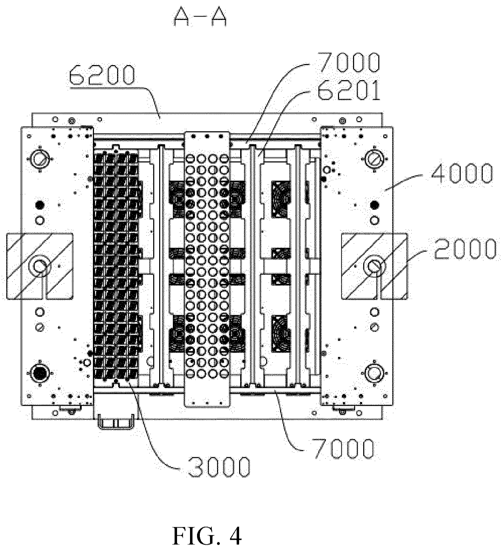

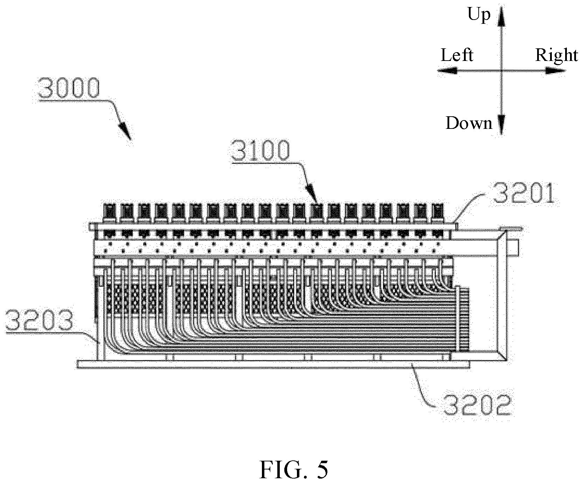

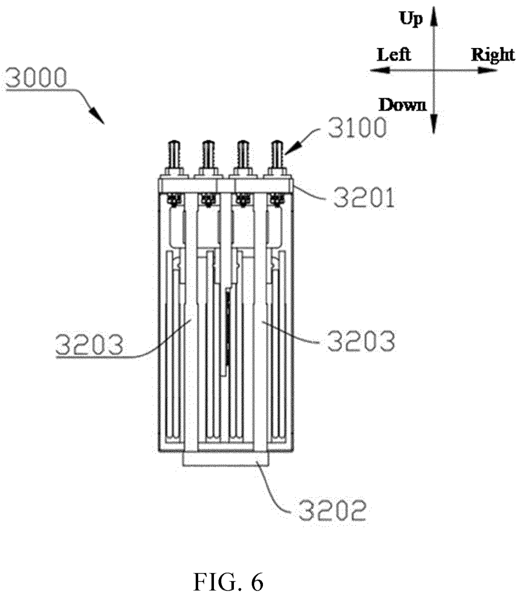

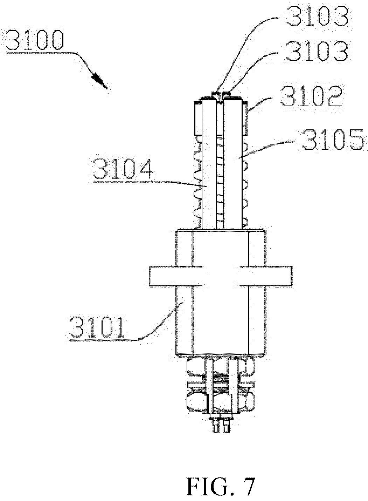

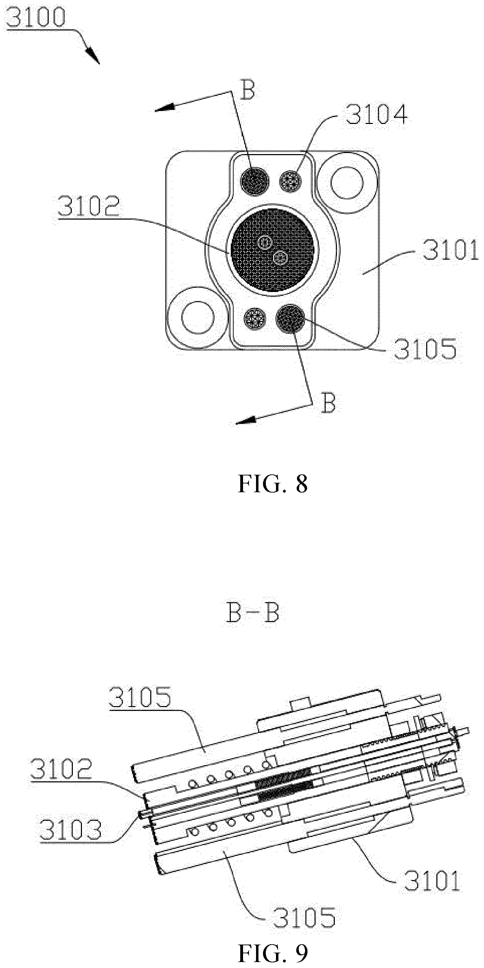

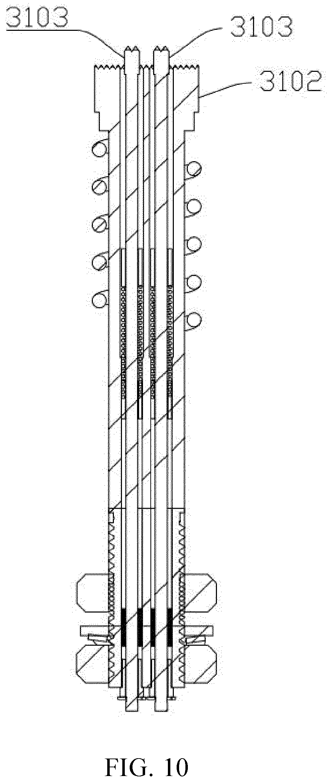

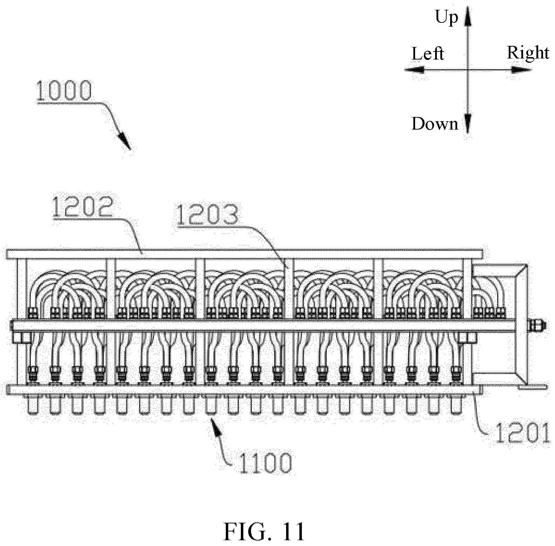

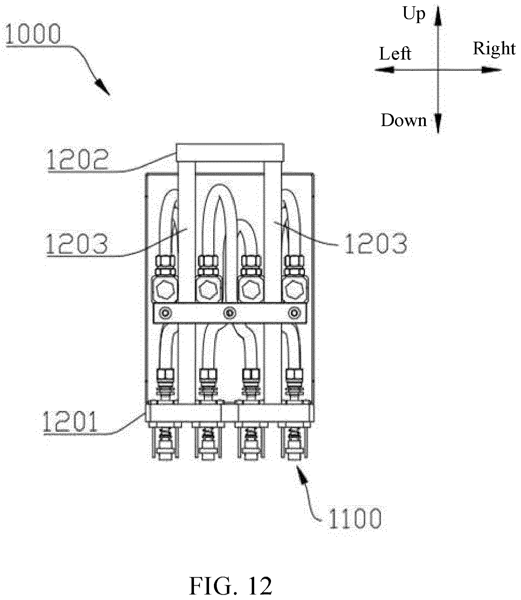

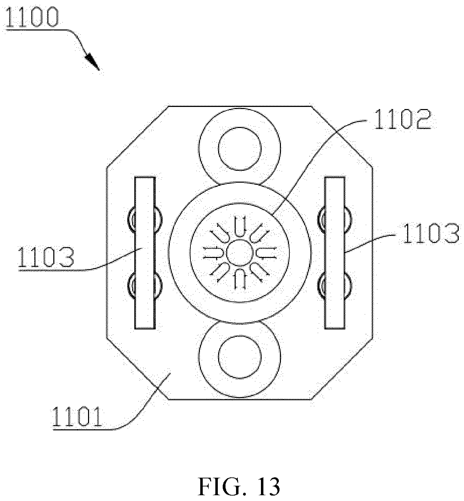

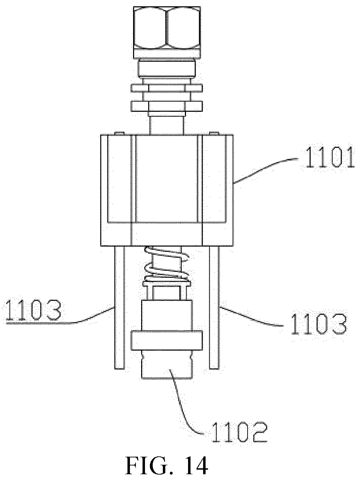

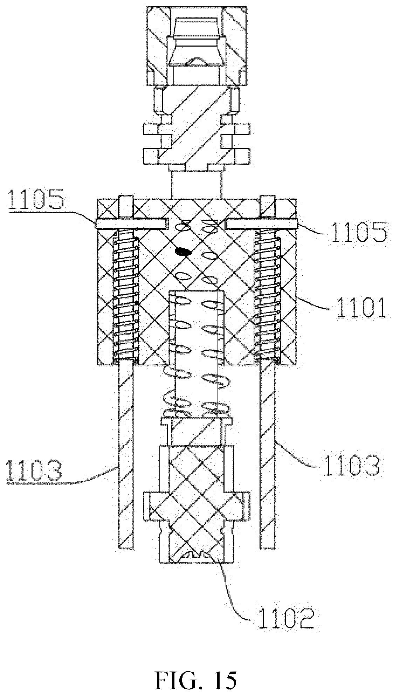

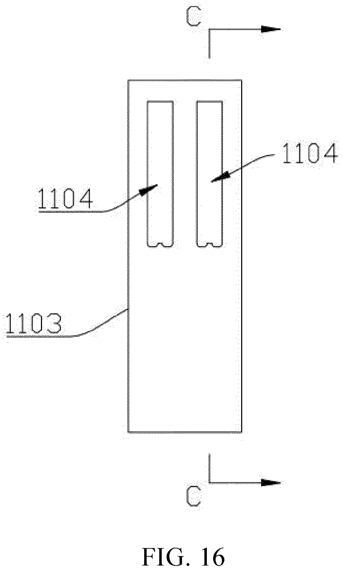

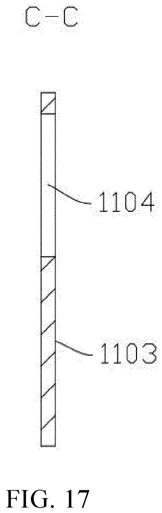

The embodiments of the present application are described in detail below with reference to FIGS. 1 to 17, examples of which are shown in the accompanying drawings, wherein the same or similar reference numerals represent the same or similar elements or elements having the same or similar functions throughout. The embodiments described below with reference to the accompanying drawings are exemplary and are only used to explain the present application, and cannot be understood as a limitation to the present application.

In the description of the present application, it should be understood that if the orientation or positional relationship indicated by the terms "center", "middle", "longitudinal", "transverse", "length", "width", "thickness", "upper", "lower", "front", "rear", "left", "right", "vertical", "horizontal", "top", "bottom", "inner", "outer", "axial", "radial", "circumferential" and the like is based on the orientation or positional relationship shown in the drawings, it is only for the convenience of describing the present application and simplifying the description, rather than indicating or implying that the device or element referred to must have a particular orientation, be constructed and operated in a particular orientation, and therefore cannot be understood as a limitation to the present application. In addition, features defined with "first" and "second" may explicitly or implicitly include one or more of the features. In the descriptions of the present application, unless otherwise specified, "a plurality of" means two or more than two.

In the description of the present application, it should be noted that, unless otherwise clearly specified and defined, the terms "installation", "connection", and "connected" should be understood in a broad sense, for example, it may be a fixed connection, a detachable connection, or an integral connection; it may be a mechanical connection or an electrical connection; it may be a direct connection, an indirect connection through an intermediate medium, or an internal communication between two elements. For a person of ordinary skill in the art, specific meanings of the foregoing terms in the present application can be understood based on a specific situation.

Embodiments of the present application relate to a charging and discharging device. The charging and discharging device includes a pressing assembly, a first driving assembly 2000, a probe mechanism 3000, and a supporting plate 4000. The pressing assembly includes a negative pressure mechanism 1000. It can be understood that the charging and discharging device includes a rack, the negative pressure mechanism 1000 is disposed on the rack, and the first driving assembly 2000 is connected to the rack. The negative pressure mechanism 1000 is connected to the first driving assembly 2000, the probe mechanism 3000 is disposed on the rack, the supporting plate 4000 is connected to the rack, the supporting plate 4000 is configured to carry a tray, and the supporting plate 4000 is capable of moving.

Optionally, in the first direction, the supporting plate 4000 is provided between the pressing assembly and the probe mechanism 3000, specifically, the supporting plate 4000 is provided between the negative pressure mechanism 1000 and the probe mechanism 3000. After the first driving assembly 2000 drives the negative pressure mechanism 1000 to move in the first direction to be engaged with the battery in the tray, the first driving assembly 2000 continues driving the negative pressure mechanism 1000 and the supporting plate 4000 to move in the first direction, so that the battery in the tray is engaged with the probe mechanism 3000.

It can be understood that the position of the probe mechanism 3000 is kept stationary, which can reduce the length of the wire hardness to be connected to the probe mechanism 3000 and facilitate wiring, and the first driving assembly 2000 is used to realize the movement of the negative pressure mechanism 1000 and the supporting plate 4000 to the probe mechanism 3000, which can avoid pulling the wire hardness caused by the movement of the probe mechanism 3000, and avoid the probe offset and joint damage caused by pulling the wire hardness, thereby improving the accuracy of the position of the probe assembly 3100 and the reliability of the device.

With reference to the drawings, the negative pressure mechanism 1000 is arranged on an upper part of the rack, the supporting plate 4000 is arranged on a middle part of the rack, and the probe mechanism 3000 is arranged on a lower part of the rack. It can be understood that under the action of the first driving assembly 2000, the negative pressure mechanism 1000 is gradually pressed down to complete the engaging between the negative pressure mechanism 1000 and the battery and the engaging between the battery and the probe assembly 3100. In this case, the first direction is a direction from top to bottom, and if there are other situations in the orientations of the negative pressure mechanism 1000, the supporting plate 4000 and the probe mechanism 3000, the first direction is adaptively understood.

In some examples, the first driving assembly 2000 pneumatically drives the negative pressure assembly 1100 to move, and specifically, the first driving assembly 2000 includes a cylinder. Certainly, in some examples, the first driving assembly 2000 may alternatively be designed as follows: The first driving assembly 2000 includes a hydraulic cylinder or a motor.

It can be understood that, in order to make the negative pressure mechanism 1000 move smoothly, there are a plurality of first driving assemblies 2000. In some examples, there are two first driving assemblies 2000, and specifically, the opposite positions on the negative pressure mechanism 1000 are each connected to one first drive assembly 2000.

As an embodiment, the charging and discharging device includes a second driving assembly 5100 connected to the rack, the second driving assembly 5100 is provided below the tray 4000, and an output end of the second driving assembly 5100 is configured to abut against the tray 4000 and push the tray 4000 to move in a direction opposite to the first direction, so that the tray 4000 moves to the feeding height of the tray, thereby ensuring the height consistency of the tray 4000 when feeding the tray, and facilitating the tray to enter the supporting plate 4000.

The second driving assembly 5100 pneumatically drives the supporting plate 4000 to move, and specifically, the second driving assembly 5100 includes a cylinder. Certainly, in some examples, the second driving assembly 5100 may alternatively be designed as follows: The second driving assembly 5100 includes a hydraulic cylinder or a motor.

Optionally, the output end of the second driving assembly 5100 can be separated from the supporting plate 4000 to release the second driving assembly 5100 from abutting against the supporting plate 4000. Specifically, when the output end of the second driving assembly 5100 is retracted in the first direction, the output end of the second driving assembly 5100 is released from abutting against the lower side surface of the supporting plate 4000.

As an embodiment, the charging and discharging device includes an elastic structure 5200, a plurality of elastic structures 5200 are provided, the elastic structure 5200 is connected to the rack, and in the case where the second driving assembly 5100 is released from abutting against the supporting plate 4000, the elastic structure 5200 is configured to abut against the supporting plate 4000. The elastic structure 5200 is pressed and can be retracted and compressed in the first direction to buffer the supporting plate 4000 and the negative pressure mechanism 1000, and the buffer and elastic support of the elastic structure 5200 are used to help the negative pressure mechanism 1000 to be engaged with the battery.

Specifically, the second driving assembly 5100 lifts the supporting plate 4000 to the feeding height, the tray is placed on the supporting plate 4000, the output end of the second driving assembly 5100 is retracted in the first direction, and the supporting plate 4000 descends in the first direction until the elastic structure 5200 abuts against the supporting plate 4000. Then the output end of the second driving assembly 5100 continues to retract, the first driving assembly 2000 drives the negative pressure mechanism 1000 to press down in the first direction, the negative pressure mechanism 1000 abuts against the battery, then the first driving assembly 2000 drives the negative pressure mechanism 1000 to further press down, at this time, the supporting plate 4000 can be avoided due to the retraction of the second driving assembly 5100. When the supporting plate 4000 moves close to the probe mechanism 3000 in the first direction, the elastic structure 5200 is compressed, so that the battery is pressed down to a position capable of abutting against the probe mechanism 3000.

Certainly, as an alternative solution, it may be designed that the charging and discharging device is not provided with a second driving assembly 5100, but uses an elastic structure 5200 to lift the supporting plate 4000 to the feeding height of the tray.

As an embodiment, the elastic structure 5200 includes a supporting rod, a buffer elastic member, and a supporting head, where a bottom of the supporting rod is connected to a bottom of the rack, the buffer elastic member is configured as a spring, the buffer elastic member is sleeved on the supporting rod, the supporting head is disposed on a top of the supporting rod, and the buffer elastic member applies elastic pressure to the supporting head, so that the supporting head can float up and down.

The supporting rod is fixedly connected to the rack, the supporting head is arranged on a top of the supporting rod, and the supporting head may move up and down on the top of the supporting rod. An upper end of the buffer elastic member abuts against the lower side surface of the supporting head, and a lower end of the buffer elastic member abuts against a shaft shoulder of the supporting rod or the rack.

Regarding the manner in which the elastic structure 5200 implements elastic support, as an alternative solution, it may also be designed that in some examples, the supporting head is fixedly connected to the top of the supporting rod, the bottom of the supporting rod passes through the guide hole provided by the rack, the lower end of the buffer elastic member is fixedly connected to the rack, and the upper end of the buffer elastic member abuts against the supporting head. In some examples, the elastic structure 5200 is configured as a spring, an upper end of the elastic structure 5200 is configured to abut against a lower side surface of the supporting plate 4000, and a lower end of the elastic structure 5200 is fixedly connected to the rack.

As an embodiment, the charging and discharging device includes a plurality of second limiting structures, the second limiting structures are connected to the rack, and in a process in which the supporting plate 4000 moves in the first direction, the second limiting structures are configured to abut against the supporting plate 4000, to limit a relative position between the battery and the probe mechanism 3000, and prevent the battery from being excessively pressed down.

Specifically, when the negative pressure mechanism 1000 and the supporting plate 4000 move close to the probe mechanism 3000 in the first direction, the elastic structure 5200 is gradually compressed until the second limiting structure abuts against the supporting plate 4000, and at this time, the battery in the tray is engaged with the probe mechanism 3000.

With reference to the accompanying drawings, the second limiting structure is disposed as an upright column 6300. It can be understood that when the elastic structure 5200 is in an uncompressed state, the top of the second limiting structure is lower than the top of the elastic structure 5200.

Certainly, as an equivalent replacement, it may be designed that the upper end of the second limiting structure is connected to the supporting plate 4000, and when the lower end of the second limiting structure abuts against the rack during the pressing down of the supporting plate 4000, the battery is engaged with the probe mechanism 3000.

As an embodiment, the probe mechanism 3000 includes a probe assembly 3100, specifically, the probe assembly 3100 includes a probe holder 3101, a positive probe and a negative probe, and the positive probe and the negative probe are respectively connected to the probe holder 3101. Optionally, the positive probe and the negative probe are provided on a same side of the probe holder 3101, so that the probe assembly 3100 is connected to the positive electrode and the negative electrode on a same side of the battery, thereby improving structural integration and space utilization in the charging and discharging device, and the positive and negative electrodes can be synchronously engaged through a single drive in the first direction.

In some examples, the positive probe is elastically connected to the probe holder 3101, so that the positive probe can adaptively engage with the battery. Specifically, the positive probe is elastically connected to the probe holder 3101 through a first elastic member, the positive probe is partially inserted into the probe holder 3101, the first elastic member has a compressive elastic potential energy, and two ends of the first elastic member respectively apply elastic pressure to the positive probe and the probe holder 3101, so as to realize elastic installation of the positive probe on the probe holder 3101.

Specifically, the first elastic member is provided as a compression spring, the first elastic member is sleeved on the positive probe, one end of the first elastic member abuts against the positive probe, and the other end of the first elastic member abuts against the probe holder 3101. Optionally, the side surface of the positive probe is provided with a protruding shaft shoulder, and an end of the first elastic member applies elastic pressure to the positive probe by abutting against the shaft shoulder.

Optionally, the positive probe includes at least one positive sampling pin 3104 and at least one positive power pin 3105, and it can be understood that the positive sampling pin 3104 and the positive power pin 3105 are respectively elastically mounted on the probe holder 3101 through the first elastic member. Specifically, a first elastic member is sleeved on an outer side of the positive sampling pin 3104, and two ends of the first elastic member respectively apply elastic pressure to the positive sampling pin 3104 and the probe holder 3101. A first elastic member is sleeved on the outer side of the positive power pin 3105, and two ends of the first elastic member respectively apply elastic pressure to the positive power pin 3105 and the probe holder 3101.

In some examples, the number of the positive sampling pins 3104 is a plurality, and the distribution of the positive sampling pins 3104 on the probe holder 3101 is centrosymmetric, which facilitates the force balance of the battery when the positive sampling pins 3104 are engaged with the battery, and improves the engaging accuracy of the battery.

In some examples, a plurality of positive power pins 3105 are provided to reduce the formation resistance and improve the production efficiency and the reliability of the device. Optionally, the distribution of the positive power pins 3105 on the probe holder 3101 is centrosymmetric, which facilitates the force balance of the battery when the positive power pins 3105 are engaged with the battery, and improves the engaging accuracy of the battery.

In some examples, the negative probe is disposed at a symmetric center of the positive probe.

With reference to the accompanying drawings, in some examples, the number of the positive sampling pins 3104 and the number of the positive power pins 3105 are respectively provided to two, the positive sampling pins 3104 are symmetrically distributed about the center of the negative probe, and the positive power pins 3105 are symmetrically distributed about the center of the negative probe.

In some examples, the positive probe is elastically connected to the probe holder 3101, so that the positive probe can adaptively engage with the battery. Specifically, the negative probe includes a negative power pin 3102 and a negative sampling pin 3103, the negative sampling pin 3103 is partially inserted into the negative power pin 3102, the negative sampling pin 3103 is arranged at a center position of one end of the negative power pin 3102, an insulating structure is arranged on a side surface of the negative sampling pin 3103, and the insulating structure is arranged as an insulating sleeve. The negative power pin 3102 is elastically connected to the probe holder 3101 through a second elastic member, the negative power pin 3102 is partially inserted into the probe holder 3101, and two ends of the second elastic member respectively apply elastic pressure to the negative power pin 3102 and the probe holder 3101.

Specifically, the second elastic member is configured as a compression spring, the second elastic member is sleeved on the negative power pin 3102, one end of the second elastic member abuts against the negative power pin 3102, and the other end of the second elastic member abuts against the probe holder 3101. Optionally, a side surface of the negative power pin 3102 is provided with a protruding shaft shoulder, and an end of the second elastic member applies elastic pressure to the negative power pin 3102 by abutting against the shaft shoulder.

Optionally, the negative sampling pin 3103 is elastically connected to the negative power pin 3102, specifically, the negative sampling pin 3103 is elastically connected to the negative power pin 3102 through a fifth elastic member, and two ends of the fifth elastic member respectively apply elastic pressure to the negative power pin 3102 and the negative sampling pin 3103. In some examples, the fifth elastic member is configured as a spring, and the fifth elastic member is sleeved on the negative sampling pin 3103 or abuts against one end of the negative sampling pin 3103.

Aa an embodiment, the probe mechanism 3000 includes a first mounting plate 3201, a first bottom plate 3202, and a plurality of first isometry connection structures 3203, the probe holder 3101 is connected to the first mounting plate 3201, the first bottom plate 3202 is connected to the rack, and the plurality of first isometry connection structures 3203 are disposed between the first mounting plate 3201 and the first bottom plate 3202.

It can be understood that two ends of each of the first isometry connection structures 3203 are respectively connected to the first mounting plate 3201 and the first bottom plate 3202, and the first isometry connection structures 3203 are configured as isometry columns, so that a spacing between the first mounting plate 3201 and the first bottom plate 3202 is balanced. With reference to the accompanying drawings, there are a plurality of probe assemblies 3100, and the plurality of probe assemblies 3100 are all connected to the first mounting plate 3201 through the probe holder 3101, and the providing of the first isometry connection structures 3203 is to ensure that the probe assemblies 3100 are located at a same height on the first mounting plate 3201, thereby improving position accuracy of the probe assemblies 3100.

In some examples, the first isometry connection structures 3203 are arranged in two columns between the first mounting plate 3201 and the first bottom plate 3202. On the one hand, the first isometry connection structures 3203 play an isometry limiting role, and on the other hand, plays a role of connecting the first mounting plate 3201 and the first bottom plate 3202 to form a frame structure of the probe mechanism 3000.

It should be additionally noted that, corresponding to the number of batteries in the tray, the number of the probe assemblies 3100 is provided to be a plurality, and optionally, the probe assemblies 3100 are arranged in at least one column, and each probe assembly 3100 may be independently connected to a battery. In some examples, the probe assemblies 3100 are distributed in an array.

As an embodiment, the negative pressure mechanism 1000 includes a negative pressure assembly 1100, specifically, the negative pressure assembly 1100 includes a suction nozzle holder 1101 and a negative pressure suction nozzle 1102, and the negative pressure suction nozzle 1102 is connected to the suction nozzle holder 1101.

Optionally, the negative pressure suction nozzle 1102 is elastically connected to the suction nozzle holder 1101, so that the negative pressure suction nozzle 1102 can be adaptively engaged with the battery. Specifically, the negative pressure suction nozzle 1102 is elastically connected to the suction nozzle holder 1101 through a third elastic member, and two ends of the third elastic member respectively apply elastic pressure to the negative pressure suction nozzle 1102 and the suction nozzle holder 1101 to realize elastic installation of the negative pressure suction nozzle 1102 on the suction nozzle holder 1101.

Specifically, the third elastic member is configured as a compression spring, one end of the third elastic member abuts against the negative pressure suction nozzle 1102, and the other end of the third elastic member abuts against the suction nozzle holder 1101. In some examples, the negative pressure suction nozzle 1102 includes a suction nozzle and a suction nozzle rod, the third elastic member is sleeved on the suction nozzle rod, an outer side wall of the suction nozzle rod is provided with a shaft shoulder, and an end of the third elastic member applies elastic pressure to the suction nozzle rod by abutting against the shaft shoulder.

As an embodiment, the negative pressure assembly 1100 includes at least one pressurization assembly, and the at least one pressurization assembly is configured to elastically abut against the battery. When the negative pressure suction nozzle 1102 is engaged with the battery, the pressurization assembly can play a balancing role, to prevent a position offset between the negative pressure suction nozzle 1102 and the battery, and can balance an acting force applied by the probe assembly 3100 to the battery.

With reference to the accompanying drawings, the pressurization assembly includes a pressurization structure 1103, the pressurization structure 1103 is configured to abut against the battery, and the pressurization structure 1103 is connected to the suction nozzle holder 1101. It can be understood that one end of the pressurization structure 1103 is connected to the suction nozzle holder 1101, and the other end of the pressurization structure 1103 is configured to abut against the battery. Optionally, the pressurization assembly includes a fourth elastic member, the fourth elastic member is connected to the pressurization structure 1103, and the pressurization structure 1103 can adaptively abut against the battery under the action of the fourth elastic member.

The fourth elastic member has a compressive potential energy, specifically, the fourth elastic member is provided as a spring. It can be understood that, when the negative pressure assembly 1100 is engaged with the battery, the pressurization structure 1103 abuts against the battery, the pressurization structure 1103 is pressurized and compresses the fourth elastic member, and two ends of the fourth elastic member respectively apply elastic pressure to the suction nozzle holder 1101 and the pressurization structure 1103.

In some examples, the suction nozzle holder 1101 is provided with a recessed pressurization mounting area, a first end of the pressurization structure 1103 is inserted into the pressurization mounting area, the first end of the pressurization structure 1103 is provided with a first accommodating area 1104, and the fourth elastic member is provided in the first accommodating area 1104. Optionally, the first accommodating area 1104 penetrates a side wall of the pressurization structure 1103.

Optionally, the negative pressure assembly 1100 includes a first limiting structure 1105, the first limiting structure 1105 is configured as a pin, the first limiting structure 1105 is disposed on the suction nozzle holder 1101 and passes through the first accommodating area 1104, so that the pressurization structure 1103 is assembled with the suction nozzle holder 1101, and the first limiting structure 1105 can prevent the pressurization structure 1103 from being separated from the suction nozzle holder 1101. Specifically, the first limiting structure 1105 passes through the side wall of the pressurization mounting area and the first accommodating area 1104, so that the first limiting structure 1105 is connected to the suction nozzle holder 1101.

It can be understood that, when the pressurization structure 1103 abuts against the battery and the pressurization structure 1103 is pressurized, two ends of the fourth elastic member respectively apply elastic pressure to the inner side wall of the pressurization mounting area and the inner side wall of the first accommodating area 1104, to implement elastic extension and retraction of the pressurization structure 1103 on the suction nozzle holder 1101. Alternatively, it may be designed that two ends of the fourth elastic member respectively apply elastic pressure to the side surface of the first limiting structure 1105 and the inner side wall of the first accommodation region 1104.

As an embodiment, there are a plurality of pressurization assemblies, so as to realize multi-point support for the battery by the negative pressure assembly 1100, and optionally, the pressurization assembly is distributed on the suction nozzle holder 1101 at equal intervals around the circumferential track of the negative pressure suction nozzle 1102, so as to prevent the negative pressure assembly 1100 from being inclined when the negative pressure assembly 1100 abuts against the battery.

With reference to the accompanying drawings, in some examples, there are two pressurization assemblies, and the pressurization assemblies are symmetrically distributed on the suction nozzle holder 1101. In some examples, the pressurization structure 1103 is configured as a plate structure, and the pressurization structure 1103 is vertically mounted on the suction nozzle holder 1101.

As an embodiment, the negative pressure mechanism 1000 includes a second mounting plate 1201, a second bottom plate 1202, and a plurality of second isometry connection structures 1203, the suction nozzle holder 1101 is connected to the second mounting plate 1201, and the plurality of second isometry connection structures 1203 are disposed between the second mounting plate 1201 and the second bottom plate 1202.

It can be understood that two ends of each of the second isometry connection structures 1203 are respectively connected to the second mounting plate 1201 and the second bottom plate 1202, and the second isometry connection structures 1203 are configured as isometry columns, so that a spacing between the second mounting plate 1201 and the second bottom plate 1202 is balanced. With reference to the accompanying drawings, there are a plurality of negative pressure assemblies 1100, and the plurality of negative pressure assemblies 1100 are all connected to the second mounting plate 1201 through the suction nozzle holder 1101, and the second isometry connection structures 1203 are provided to ensure that the negative pressure assemblies 1100 are located at a same height on the second mounting plate 1201, thereby improving position accuracy of the negative pressure assemblies 1100.

In some examples, the second isometry connection structures 1203 are arranged in two columns between the second mounting plate 1201 and the second bottom plate 1202. On the one hand, the second isometry connection structures 1203 play a role of isometry limiting, and on the other hand, play a role of connecting the second mounting plate 1201 and the second bottom plate 1202 to form a frame structure of the negative pressure mechanism 1000.

It should be additionally noted that, corresponding to the number of batteries in the tray, the number of the negative pressure assemblies 1100 is provided to be a plurality, and optionally, the negative pressure assemblies 1100 are arranged in at least one column, and each negative pressure assembly 1100 may be independently connected to the battery. In some examples, the negative pressure components 1100 are distributed in an array.

As an embodiment, the charging and discharging device includes a movable bearing structure 1300, the negative pressure mechanism 1000 is connected to the movable bearing structure 1300, and the movable bearing structure 1300 is connected to the first driving assembly 2000. It can be understood that the first driving assembly 2000 drives the movable bearing structure 1300 to move in the first direction, and the movable bearing structure 1300 drives the negative pressure mechanism 1000 to move in the first direction. Specifically, the movable bearing structure 1300 is configured as a square tube frame, and the square tube frame is movably disposed on the rack in the first direction.

In some examples, the cylinder of the first driving assembly 2000 is connected to the movable bearing structure 1300, and the push rod of the first driving assembly 2000 is connected to the rack. In some examples, the alternative design is that the cylinder of the first driving assembly 2000 is connected to the rack, and the push rod of the first driving assembly 2000 is connected to the movable bearing structure 1300.

Optionally, the negative pressure mechanism 1000 is disposed on the movable bearing structure 1300 in a drawable manner, which is convenient for assembly and disassembly. Specifically, the movable bearing structure 1300 is provided with a plurality of second sliding groove members 1301, the second sliding groove member 1301 is connected to the movable bearing structure 1300, and the second sliding groove member 1301 is configured to mount the negative pressure mechanism 1000. The second sliding groove member 1301 is provided with a sliding groove, and the second bottom plate 1202 of the negative pressure mechanism 1000 is slidably clamped with the second sliding groove member 1301 and positioned through the cooperation of the connecting pin and the bayonet structure. The negative pressure mechanism 1000 is modularly designed, thereby improving the positioning accuracy of the device in the case of a large number of channels. Optionally, one end of the second bottom plate 1202 is provided with a bayonet, the other end of the second bottom plate 1202 is provided with a connecting pin, one end of the second sliding groove member 1301 is correspondingly provided with a connecting pin, and the other end of the second sliding groove member 1301 is correspondingly provided with a bayonet.

As an embodiment, the rack includes a top square tube frame 6100, a bottom square tube frame 6200, and a plurality of upright columns 6300, and two ends of each of the upright columns 6300 are respectively connected to the top square tube frame 6100 and the bottom square tube frame 6200, to form a frame-type rack. It can be understood that the probe mechanism 3000 is connected to the bottom square tube frame 6200.

Optionally, the probe mechanism 3000 is disposed on the bottom square tube frame 6200 in a drawable manner, which is convenient for assembly and disassembly. Specifically, the bottom square tube frame 6200 is provided with a plurality of first sliding groove members 6201, the first sliding groove member 6201 is connected to the bottom square tube frame 6200, and the first sliding groove member 6201 is configured to mount the probe mechanism 3000. The first sliding groove member 6201 has a sliding groove, and the first bottom plate 3202 of the probe mechanism 3000 is slidably clamped with the first sliding groove member 6201 and is positioned through cooperation of a connecting pin and a bayonet structure. The probe mechanism 3000 is modularly designed, thereby improving the positioning accuracy of the device in the case of a large number of channels. Optionally, one end of the second bottom plate 1202 is provided with a bayonet, the other end of the second bottom plate 1202 is provided with a connecting pin, one end of the second sliding groove member 1301 is correspondingly provided with a connecting pin, and the other end of the second sliding groove member 1301 is correspondingly provided with a bayonet.

On the other hand, the probe mechanism 3000 is arranged on the bottom square tube frame 6200, which can effectively reduce the accumulated error of the installation for the probe mechanism 3000 in the charging and discharging device and improve the position accuracy of the probe mechanism 3000.

In some examples, the movable bearing structure 1300 is provided with a linear bearing or shaft sleeve for connecting the upright column 6300, and under the driving of the first driving assembly 2000, the movable bearing structure 1300 moves in the first direction by using the upright column 6300 as a guide rod, so that the movable bearing structure 1300 and the negative pressure mechanism 1000 move smoothly.

In some examples, the supporting plate 4000 is provided with a linear bearing or shaft sleeve for connecting the upright column 6300, and when the supporting plate 4000 moves in the first direction, the supporting plate 4000 uses the upright column 6300 as a guide rod, so that the supporting plate 4000 and the battery move smoothly.

In some examples, the charging and discharging device includes one or more first limiting plates 7000, a side wall of the first limiting plate 7000 is provided with a third limiting structure, and the third limiting structure is mounted with the first mounting plate 3201 in a matching manner. After the probe mechanism 3000 is mounted in place in the rack, two ends of the probe mechanism 3000 are each provided with one first limiting plate 7000 to improve the mounting stability of the probe mechanism 3000. Specifically, the third limiting structure is recessed or protruded on the side wall of the first limiting plate 7000, and correspondingly, the side wall of the first mounting plate 3201 is provided with a protruding structure or a recessed structure.

In some examples, the charging and discharging device includes one or more second limiting plates, a fourth limiting structure is disposed on a side wall of the second limiting plate, and the fourth limiting structure is mounted in a matching manner with the second mounting plate. After the negative pressure mechanism 1000 is mounted in place on the movable bearing structure, and two ends of the negative pressure mechanism 1000 are each provided with one second limiting plate to improve mounting stability of the negative pressure mechanism 1000. Specifically, the fourth limiting structure is recessed or protruded on the side wall of the second limiting plate, and correspondingly, the side wall of the second mounting plate is provided with a protruding structure or a recessed structure.

As an embodiment, the supporting plate 4000 is provided with an accommodating area, and the tray is disposed in the accommodating area. It can be understood that the stacker transfers trays to the accommodating area of the supporting plate 4000.

It can be understood that the bottom of the accommodating area is provided with a relief area to avoid the probes of the probe assembly 3100, so that the probes are engaged with the battery.

In order to make the supporting plate 4000 stably support the tray, the supporting plate 4000 is provided with a supporting plate, and the supporting plate is arranged in the middle of the accommodating area to support the middle of the bottom of the tray.

Optionally, the supporting plate 4000 is provided with a guide limiting structure, and a limiting surface of the guide limiting structure constitutes a side wall of the accommodating area. Specifically, guide limiting structures are respectively connected around the accommodating area, so that the tray enters the accommodating area along the guide limiting structures. In some examples, the guide limiting structure is configured as a guide plate, the guide limiting structure is inclined at an opening of the accommodating area, and the guide limiting structure forms an inclined guide surface at the opening of the accommodating area. In the accommodating area, in a direction in which the tray is close to the supporting plate 400, a gradually reduced horn mouth is formed.

In some examples, the supporting plate 4000 is provided with a first positioning structure provided on the bottom of the accommodating area, and the first positioning structure is connected to the tray to position the tray on the supporting plate 4000. Specifically, the first positioning structure is protruded, and the first positioning structure is configured as a positioning pin to achieve accurate positioning of the tray.

As an embodiment, the charging and discharging device includes a fan assembly, the fan assembly dissipates heat from the probe assembly 3100 and the battery, and the fan assembly generates a heat dissipation airflow. Specifically, the fan assembly is connected to the rack. Optionally, the fan assembly is disposed on the bottom of the rack, and the fan assembly is connected to the bottom square tube frame 6200.

Based on the foregoing description of the charging and discharging device, the charging and discharging device may alternatively be designed in a form of not having the negative pressure mechanism 1000, but the pressing assembly is designed to include an upper pressing structure, and the supporting plate 4000 is located between the upper pressing structure and the probe mechanism 3000.

It can be understood that the first driving assembly 2000 drives the upper pressing structure to move in the first direction, the upper pressing structure is close to the supporting plate 4000 in the first direction and abuts against the battery in the tray, and under the pressing of the upper pressing structure, the supporting plate 4000 is close to the probe mechanism 3000 in the first direction and abuts against the probe mechanism 3000.

In the case where the charging and discharging device is provided with the elastic structure 5200, when the upper pressing structure presses down the tray, the elastic structure 5200 is gradually compressed, and the elastic structure 5200 plays a role of buffering and supporting the supporting plate 4000. Optionally, the second limiting structure is arranged to abut against the pressing supporting plate 4000, and at this time, the probe mechanism 3000 is engaged with the battery.

In the case where the charging and discharging device is provided with the second driving assembly 5100, the second driving assembly 5100 lifts the supporting plate 4000 to the feeding height of the tray. Certainly, as an alternative solution, it may be designed that the charging and discharging device is not provided with a second driving assembly 5100, but uses an elastic structure 5200 to lift the supporting plate 4000 to the feeding height of the tray.

As an embodiment, in the case where the rack is provided with the upright column 6300, the upper pressing structure is provided with a linear bearing or shaft sleeve for connecting the upright column 6300, and under the driving of the first driving assembly 2000, the upper pressing structure moves in the first direction by using the upright column 6300 as a guide rod, so that the upper pressing structure moves smoothly.

The following describes in detail content of the charging and discharging method in the embodiments of the present application by using specific embodiments, and it should be noted that the following description is merely an example, but is not intended to limit the present application.

The embodiment of the present application relates to a charging and discharging method, the charging and discharging method is implemented by adopting the charging and discharging device. Specifically, the charging and discharging device includes a pressing assembly, a first driving assembly 2000, a probe mechanism 3000 and a supporting plate 4000, the pressing assembly includes an upper pressing structure or a negative pressure mechanism 1000, and the supporting plate 4000 is provided between the pressing assembly and the probe mechanism 3000 in the first direction. With reference to the accompanying drawings, the pressing assembly is provided on the upper part of the rack, the probe mechanism 3000 is provided on the lower part of the rack, the supporting plate 4000 is provided on the middle part of the rack, and the supporting plate 4000 can be lifted and lowered.

The charging and discharging method includes the following steps S1 to S3.

At step S1, the tray enters the supporting plate 4000, and the supporting plate 4000 carries the tray.

At step S2, the first driving assembly 2000 drives the pressing assembly to move in the first direction, the pressing assembly is close to the supporting plate 4000, the pressing assembly abuts against the battery in the tray, and the pressing assembly abuts against the upper side of the battery;

At step S3, under the driving of the first driving assembly 2000, the pressing assembly and the supporting plate 4000 continue moving in the first direction, and the tray approaches the probe mechanism 3000 until the battery in the tray is engaged with the probe mechanism 3000.

In some examples, in the case where the pressing assembly includes the negative pressure mechanism 1000, when the pressing assembly abuts against the battery at step S2, the negative pressure structure abuts against the battery. In some examples, in the case where the pressing assembly includes the upper pressing structure, when the pressing assembly abuts against the battery at step, the upper pressing structure presses against the battery.

As an embodiment, the charging and discharging device includes a second driving assembly 5100 and an elastic structure 5200, and the output end of the second driving assembly 5100 and the elastic structure 5200 are both located on the same side of the supporting plate 4000 where the probe mechanism 3000 is located. It can be understood that both the output end of the second driving assembly 5100 and the elastic structure 5200 can be configured to abut against the lower side surface of the supporting plate 4000.

Specifically, before step S1, the output end of the second driving assembly 5100 pushes the supporting plate 4000 to the feeding height of the tray in a direction opposite to the first direction.

Optionally, after the tray is carried by the supporting plate 4000 and before step S2, the output end of the second driving assembly 5100 is retracted in the first direction to release the abutting to the supporting plate 4000, after the output end of the second driving assembly 5100 is separated from the supporting plate 4000, the elastic structure 5200 abuts against the supporting plate 4000, and during the pressing to the battery by the pressing assembly, the elastic structure 5200 can be compressed in the first direction. Thus, the supporting plate 4000, the tray and the battery can be lowered until the probe mechanism 3000 is engaged with the battery.

In the description of this specification, the description with reference to the terms "one embodiment", "some implementations", "some embodiments", "schematic embodiments", "example", "specific example", or "some examples" and the like means that specific features, structures, materials, or characteristics described in conjunction with the embodiment or example are included in at least one embodiment or example of the present application. In this specification, the schematic representation of the above terms does not necessarily refer to the same embodiment or example. Furthermore, the particular features, structures, materials, or characteristics may be combined in any suitable manner in any one or more embodiments or examples.

The embodiments of the present application have been described in detail above with reference to the accompanying drawings, but the present application is not limited to the above embodiments, and various changes may be made without departing from the spirit of the present application within the knowledge scope of those skilled in the art.

In the descriptions of the present application, if the patent name "," indicates an "and" relationship rather than an "or" relationship. For example, a patent entitled "A, B" indicates that content claimed in the present application is a technical solution whose subject name is A and a technical solution whose subject name is B.

## Claims

1. A charging and discharging device, comprising:
a rack;
a pressing assembly disposed on the rack and comprising a negative pressure mechanism or an upper pressing structure;
a first driving assembly connected to the rack;
a probe mechanism disposed on the rack; and
a supporting plate configured to carry a tray, wherein the supporting plate is connected to the rack, and the supporting plate is provided between the pressing assembly and the probe mechanism in a first direction;
wherein the first driving assembly is configured to drive the pressing assembly to move in the first direction to abut against a battery in the tray to drive the tray to move in the first direction to enable the battery in the tray to be engaged with the probe mechanism.

2. The charging and discharging device of claim 1, wherein the probe mechanism comprises a probe assembly, the probe assembly comprises a probe holder, a positive probe and a negative probe, and the positive probe and the negative probe are respectively connected to the probe holder.

3. The charging and discharging device of claim 2, wherein the positive probe comprises at least one positive sampling pin and at least one positive power pin, the positive sampling pin and the positive power pin are respectively elastically connected to the probe holder through a first elastic member, and the first elastic member has a compressive elastic potential energy.

4. The charging and discharging device of claim 3, wherein the negative probe comprises a negative power pin and a negative sampling pin, the negative sampling pin is elastically connected to the negative power pin through a fifth elastic member, two ends of the fifth elastic member are configured to apply elastic pressure to the negative power pin and the negative sampling pin respectively, the negative power pin is elastically connected to the probe holder through a second elastic member, and two ends of the second elastic member are configured to apply elastic pressure to the negative power pin and the probe holder respectively.

5. The charging and discharging device of any one of claims 2 to 4, wherein the probe mechanism comprises a first mounting plate, a first bottom plate, and a plurality of first isometry connection structures, the plurality of first isometry connection structures are disposed between the first mounting plate and the first bottom plate, and the plurality of probe assemblies are all connected to the first mounting plate through the probe holder.

6. The charging and discharging device of claim 1, wherein the pressing assembly comprises a negative pressure mechanism, the negative pressure mechanism comprises a negative pressure assembly, the negative pressure assembly comprises a suction nozzle holder and a negative pressure suction nozzle, the negative pressure suction nozzle is elastically connected to the suction nozzle holder through a third elastic member, and two ends of the third elastic member are configured to apply elastic pressure to the negative pressure suction nozzle and the suction nozzle holder, respectively.

7. The charging and discharging device of claim 6, wherein the negative pressure assembly comprises a pressurization assembly, the pressurization assembly comprises a pressurization structure and a fourth elastic member, the pressurization structure is configured to abut against the battery, the fourth elastic member is connected to the pressurization structure, and the pressurization structure is connected to the suction nozzle holder; and in a case where the negative pressure assembly is engaged with the battery, the pressurization structure is pressurized to compress the fourth elastic member.

8. The charging and discharging device of claim 7, wherein the suction nozzle holder is provided with a recessed pressurization mounting area, a first end of the pressurization structure is inserted into the pressurization mounting area, the first end of the pressurization structure is provided with a first accommodating area, and the fourth elastic member is provided in the first accommodating area.

9. The charging and discharging device of claim 8, wherein the negative pressure assembly comprises a first limiting structure, the first limiting structure is disposed on the suction nozzle holder and passes through the first accommodating area, and two ends of the fourth elastic member are configured to apply elastic pressure to the suction nozzle holder and the pressurization structure, respectively.

10. The charging and discharging device of any one of claims 6 to 9, wherein the negative pressure mechanism comprises a second mounting plate, a second bottom plate, and a plurality of second isometry connection structures, the plurality of second isometry connection structures are disposed between the second mounting plate and the second bottom plate, and the plurality of negative pressure assemblies are all connected to the second mounting plate through the suction nozzle holder.

11. The charging and discharging device of claim 1, wherein the charging and discharging device comprises a second driving assembly, the second driving assembly is connected to the rack, an output end of the second driving assembly is configured to abut against the supporting plate and push the supporting plate to move in a direction opposite to the first direction, and the output end of the second driving assembly is capable of being separated from the supporting plate to release the second driving assembly from abutting against the supporting plate.

12. The charging and discharging device of claim 11, wherein the charging and discharging device comprises an elastic structure, and the elastic structure is connected to the rack; and in a case where the second driving assembly is released from abutting against the supporting plate, the elastic structure abuts against the supporting plate, and the supporting plate moves close to the probe mechanism in the first direction to compress the elastic structure.

13. A charging and discharging method, wherein the charging and discharging method is implemented by a charging and discharging device, the charging and discharging device comprises a pressing assembly, a first driving assembly, a probe mechanism and a supporting plate, the pressing assembly comprises an upper pressing structure or a negative pressure mechanism, and the supporting plate is provided between the pressing assembly and the probe mechanism in a first direction; wherein the charging and discharging method comprises:
carrying a tray by the supporting plate;
driving the pressing assembly by the first driving assembly to move in a first direction and abut against a battery in the tray; and
continuing driving the pressing assembly and the supporting plate by the first driving assembly to move in the first direction until the battery in the tray is engaged with the probe mechanism.

14. The charging and discharging method of claim 13, **characterized in that** the charging and discharging device comprises a second driving assembly and an elastic structure, and an output end of the second driving assembly and the elastic structure are both provided on a same side of the supporting plate where the probe mechanism is located;
wherein before the tray is carried by the supporting plate, the output end of the second driving assembly pushes the supporting plate in a direction opposite to the first direction to a feed height of the tray; and
after the tray is carried by the supporting plate, and before the first driving assembly drives the pressing assembly to move in the first direction and abut against the battery in the tray, the output end of the second driving assembly retracts in the first direction to be released from abutting against the supporting plate, and after the output end of the second driving assembly is separated from the supporting plate, the elastic structure abuts against the supporting plate, and the elastic structure is capable of being compressed in the first direction.
